# EUROPÄISCHE PATENTSCHRIFT

(11) **EP 0 708 257 B1**
(45) Veröffentlichungstag und Bekanntmachung des Hinweises auf die Patenterteilung: **03.11.1999**
(21) Anmeldenummer: 95113889.0
(22) Anmeldetag: 05.09.1995
(51) Int. Cl.: F16B 13/08

(54) **Befestigungselement mit Spreizelement**
Fastener with expanding element
Elément de fixation avec dispositif d'expansion

(30) Priorität: 17.10.1994 DE 4437037; 23.11.1994 DE 4441750
(43) Veröffentlichungstag der Anmeldung: 24.04.1996
(73) Patentinhaber: fischerwerke Artur Fischer GmbH & Co. KG, D-72178 Waldachtal (DE)
(72) Erfinder: Fischer, Artur, Prof. Dr. h.c. Dr. Ing. E.h., D-72178 Waldachtal (DE)

(56) Entgegenhaltungen:
- DE-A- 2 316 163
- DE-A- 2 914 739
- DE-A- 3 220 483
- FR-A- 2 304 816
- GB-A- 1 321 479
- GB-A- 2 150 248
- US-A- 3 427 919

## Beschreibung

Die Erfindung betrifft ein Befestigungselement mit am hinteren Ende angeordnetem Haltemittel zur Verspannung eines Gegenstandes gemäß dem Oberbegriff des Anspruches 1.

Aus der GB 2 150 248 A ist ein gattungsgemäßes Befestigungselement bekannt, das einen vom vorderen Stirnende ausgehenden und in Längsrichtung über einen Teil der Länge des Schaftes des Befestigungselementes verlaufenden Spreizbereich aufweist. Der Spreizbereich ist durch eine zum vorderen Stirnende eine ansteigende Grundfläche aufweisenden Längsnut mit in der Längsnut eingesetztem und zum vorderen Stirnende verschiebbaren Keil gebildet, der an seiner Außenfläche Zähne aufweist.

Beim Einschieben des bekannten Befestigungselementes in ein Bohrloch verschiebt sich der Keil in der Längsnut so weit nach hinten, bis ein dem Bohrlochdurchmesser entsprechendes Außenmaß des Befestigungselementes erreicht ist. Da auf die Zähne kein Druck ausgeübt wird, können diese nicht in die Bohrlochwandung eindringen. Bei dem bekannten Befestigungselement ist somit nicht sichergestellt, daß bei Belastung zwischen dem Keil und dem Bolzen zwangsweise eine axiale Verschiebung entsteht, die zu einer mit der Verschiebung zunehmenden Verkeilung führt. Das Eindringen der Zähne in die Bohrlochwandung wird zusätzlich noch durch den Umstand erschwert, daß die Zähne eine der Wölbung der Bohrlochwandung entsprechende Kontur aufweisen und das bekannte Befestigungselement einschließlich dem Keil aus Kunststoff hergestellt ist.

Ferner ist der Anstieg der Längsnut bei dem bekannten Befestigungselement sehr flach ausgebildet, so daß eine große axiale Verschiebung zwischen dem Schaft und dem Keil erforderlich ist, um eine radiale Verspreizung des Keils im Bohrloch zu erreichen. Im Hinblick darauf ist das bekannte Befestigungselement nur für Leichtbefestigungen wie Dämmstoffplatten geeignet.

Aus der DE -OS 29 14 739 ist ein aus Metall bestehendes Befestigungselement bekannt, dessen Spreizbereich ebenfalls durch eine zum vorderen Stirnende eine ansteigende Grundfläche aufweisenden Längsnut und einem in die Längsnut eingesetztem Spreizelement gebildet ist. Nachteilig bei dem bekannten Befestigungselement ist jedoch, daß das Spreizelement an seiner Außenfläche Zähne aufweist, die quer zur Längsrichtung über den Schaft hinausragende gerade Kanten bilden. Diese die gesamte Breite des Spreizelementes einnehmenden Kanten bilden beim Eintreiben des Befestigungselementes in das Bauteil einen hohen Widerstand, der insbesondere bei einem aus Beton bestehenden Bauteil neben dem hohen und wenig montage-freundlichen Eintreibwiderstand auch zu die Verankerungsfunktion beeinträchtigenden Beschädigungen des Befestigungselementes führen kann. Desweiteren wird beim Eintreiben vom Spreizelement Material von der Bohrlochinnenwand abgeschabt. Dieses Material sammelt sich in der Längsnut und führt unter Umständen zu einer Verklemmung des Spreizelementes in der Längsnut. Dadurch wird die Verschiebbarkeit des Spreizelementes in der Längsnut soweit beeinträchtigt, daß ein Nachspreizen nach der Verankerung bei einer Erweiterung des Bohrloches durch Rißbildung nicht mehr möglich ist. Aufgrund dieser Beeinträchtigung ist das bekannte Befestigungselement für einen Einsatz in der Zugzone, in der Risse auftreten, nicht geeignet. Ein weiterer Grund für die Nichteignung in der Zugzone und relativ geringe Haltewerte auch in ungerissenem Beton ergibt sich bei dem bekannten Befestigungselement durch die Begrenzung der Längsnut zum vorderen Stirnende des Befestigungselementes hin durch eine Anschlagfläche. Damit ist einerseits nur ein geringer Ansteigwinkel für die Grundfläche der Längsnut erreichbar und andererseits muß auch die Länge des Spreizelementes gegenüber der Länge der Längsnut erheblich verkürzt werden, um einen ausreichenden Verschiebeweg zur Verankerung zu erhalten. Kommt desweiteren noch eine Bohrlocherweiterung durch Rißbildung hinzu, besteht die Gefahr, daß das Spreizelement an der vorderen Anschlagfläche der Längsnut anstößt und keine weitere Spreizmöglichkeit bietet. Diese Situation kann beispielsweise auch dann eintreten, wenn das vorzubohrende Bohrloch für das Befestigungselement bei der Erstellung des Bohrloches etwas größer ausfällt.

Der Erfindung liegt daher die Aufgabe zugrunde, ein Befestigungselement der eingangs genannten Gattung derart zu verbessern, daß das Befestigungselement bei geringem Widerstand eintreibbar und in einfacher Weise in einem Bauteil verankerbar ist, und durch günstiges Nachspreizverhalten hohe Haltewerte auch dann aufweist, wenn durch Rißbildung eine Bohrlocherweiterung eintritt.

Die Lösung dieser Aufgabe wird durch die im Anspruch 1 angegebenen Merkmale erreicht.

Beim Einschlagen des Befestigungselementes stützt sich der Keil an einem halbrund ausgebildeten Anschlag ab, der an der zum hinteren Ende des Befestigungselementes weisenden Begrenzung der Längsnut vorgesehen ist. Die Abstützung erfolgt in der tiefsten Position des Keil, bei der nur die an der Außenfläche des Keils angeordneten und dachförmig ausgebildeten Zähne mit einem Teil ihrer Höhe den Schaft des Befestigungselementes überragen. Damit wird beim Eintreiben des Befestigungselementes in das vorbereitete Bohrloch nur eine Riefe ausgeschabt. Da nur der Scheitelpunkt des gezahnten Keils sich in die Bohrlochwand eingräbt, ist ein geringer Widerstand beim Eintreiben des Befestigungselementes zu überwinden. Das Eingraben der Zähne bewirkt die Drehsicherung für das Befestigungselement beim Aufschrauben einer Mutter zur Verankerung des Befestigungselementes. Die Verkrallung der dachförmig angeordneten Zähne in der Bohrlochwandung reicht ferner aus, um den Keil unverrückbar zu halten und den Schaft gegenüber dem Keil axial zu verschieben. Durch die ansteigende Grundfläche der Längsnut wird der Keil radial nach außen in die Bohrlochwand gedrückt, wobei durch die Dachform der Zähne auch der Eindringwiderstand der Außenfläche des Keils in die Bohrlochwandung reduziert wird. Demzufolge wird auch für die Verankerung nur ein geringes Eindrehmoment benötigt. Da desweiteren die ansteigende Grundfläche der Längsnut in einem Abstand zum vorderen Stirnende am Außenumfang des Schaftes ausläuft, kann zum einen ein längeres Spreizelement mit größerer Pressfläche verwendet werden und zum anderen durch den steileren Ansteigwinkel der Grundfläche bei kleineren axialen Verschiebungen eine größere radiale Aufspreizung erzielt werden. Bei einem sich erweiternden Bohrloch kann der Keil ggf. mit einem Teil seiner Länge auch über die Längsnut hinaus sich verschieben, so daß die gesamte Länge des Schaftes für die Verankerung nutzbar ist.

Als besonders vorteilhaft für den Haltewert des Befestigungselementes und dessen Nachspreizverhalten hat sich eine Ausbildung erwiesen, bei der die Längsnut an ihrem zum hinteren Stirnende des Befestigungselementes weisenden Ende mindestens eine dem halben Durchmesser des Schaftes entsprechende Tiefe aufweist und der Ansteigwinkel der Grundfläche zwischen 10° und 15°, insbesondere zwischen 11° und 13° liegt.

Um die leichte Verschiebbarkeit des Keils auch bei Extrembedingungen sicherzustellen, ist es zweckmäßig, zwischen der Auflagefläche des Keils und der Grundfläche der Längsnut eine Gleitschicht anzubringen. Diese Gleitschicht kann durch Kunststoff oder einer entsprechenden Oberflächenbehandlung der Grundfläche der Längskerbe bzw. der Auflagefläche des Keils gebildet sein.

Eine weitere Verringerung des Eintreibwiderstandes ist dadurch erreichbar, daß die Höhe der an der Außenfläche des Keils angeordneten Zähne zum vorderen Stirnende hin geringfügig abnimmt.

Damit der Keil beim Einschlagen des Befestigungselementes abgestützt wird, ist ein halbrund ausgebildeter Anschlag an der zum hinteren Ende des Befestigungselementes weisenden Begrenzung der Längsnut vorgesehen, an dem der Keil an seiner tiefsten Position anliegt.

Weiterhin kann ein Halteelement, beispielsweise ein Gummiring, Prägesicken oder dgl., den Keil verschiebbar in der Längsnut vor dem Einschlagen des Befestigungselementes in das Bohrloch festhalten, damit der Keil nicht unbeabsichtigt aus der Längsnut herausfällt. Eine gute Sperrwirkung der Zähne bei geringem Einschlagwiderstand wird dadurch erreicht, daß die Zähne unterschiedliche Zahnflanken aufweisen, wobei die kürzere Zahnflanke in Richtung zum vorderen Stirnende angeordnet ist.

Um zu vermeiden, daß beim Eintreiben des Befestigungselementes durch an der Bohrlochwandung festhaftendes und in die Längsnut eindringendes Bohrmehl die Verschiebbarkeit des Keils ggf. beeinträchtigt wird, ist es zweckmäßig, am vorderen Stirnende des Befestigungselementes eine durch einen Ansatz gebildete Schabkante anzuordnen. Mit dieser Schabkante wird das Bohrmehl abgeschabt und in Richtung Bohrlochgrund geschoben.

In einer weiteren Ausgestaltung der Erfindung kann am vorderen Ende des Keils eine bis zur Spitze des ersten Zahnes sich erstreckende Anlaufschräge angeordnet sein. Damit wird zum einen das Eintreiben erleichtert und zum anderen die Preßkraft auf die Grundfläche der Längsnut, insbesondere in dem vorderen dünneren Bereich des Keils, gleichmäßiger verteilt. Es werden somit durch Spannungsspitzen sich ergebende Eindrücke in der Grundfläche vermieden, die bei einer Verschiebung des Keils aufgrund einer Zugbelastung die Freßneigung des Keils auf der Grundfläche begünstigen würden. Als besonders vorteilhaft hat sich erwiesen, wenn die Länge der Anlaufschräge wenigstens der Länge zweier Zähne und der Winkel der Anlaufschräge etwa dem Ansteigwinkel der Grundfläche der Längsnut entspricht.

In der Zeichnung ist ein Ausführungsbeispiel dargestellt.

Es zeigen:
- Figur 1: das in einem Bohrloch eines Bauteils eingesetzte Befestigungselement mit in einer Längsnut seines Spreizbereiches einliegendem Keil,
- Figur 2: einen Teillängsschnitt des Befestigungselementes von Figur 1 in verankerter Position,
- Figur 3: einen Querschnitt des Befestigungselementes nach Figur 2 gemäß der Schnittlinie A-A,
- Figur 4: eine Seitenansicht des Befestigungselementes mit einem eine Anlaufschräge aufweisenden Keil und
- Figur 5: eine Draufsicht auf den Keil gemäß Figur 4.

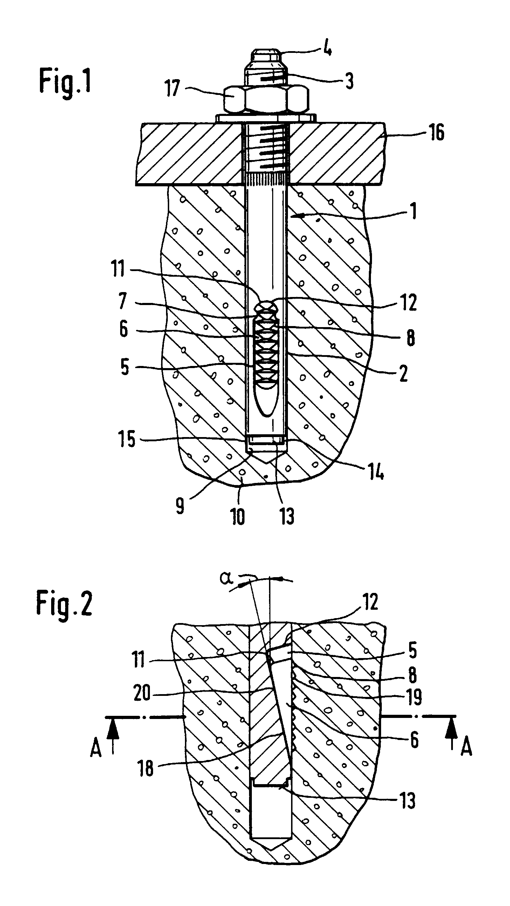

Das in Figur 1 dargestellte Befestigungselement 1 hat einen Schaft 2 mit einem Außengewinde 3 am hinteren Ende 4 und einen Spreizbereich, der durch eine Längsnut 5 mit U-förmigem Querschnitt und einem in dieser Längsnut 5 einliegenden Keil 6 gebildet ist. Der in der Längsnut 5 leicht verschiebbare Keil 6 wird durch ein Halteelement 7 - im Ausführungsbeispiel Prägesicken - gehalten.

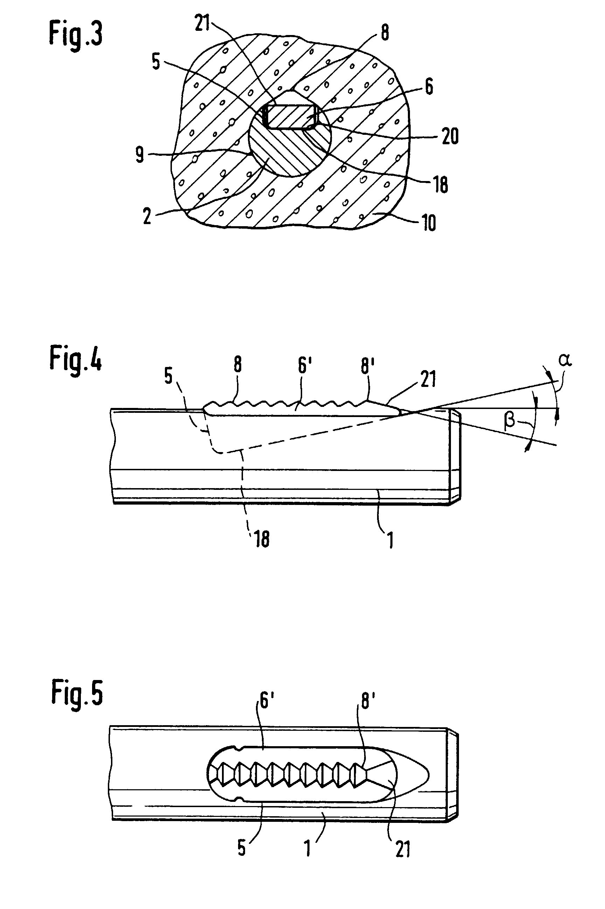

Der Keil 6 weist an seiner Außenfläche Zähne 8 auf, die im Querschnitt dachförmig ausgebildet sind. (siehe Figur 3) Beim Eintreiben des Befestigungselementes 1 in das Bohrloch 9 des Bauteiles 10 befindet sich der Keil 6 in seiner tiefsten Position, bei der die hintere, halbrund geformte Stirnseite 11 des Keils 6 an der ebenfalls halbrund geformten und als Anschlag 12 dienenden Begrenzung der Längsnut 5 anliegt. In dieser Position überragen die Zähne 8 mit einem Teil ihrer Höhe den Schaft 2 des Befestigungselementes.

Um das Bohrmehl von der Bohrlochwandung beim Eintreiben des Befestigungselementes 1 in das Bohrloch 9 abzuschaben weist das vordere Stirnende 13 des Befestigungselementes 1 einen im Durchmesser reduzierten Absatz 14 auf, durch den die Schabkante 15 gebildet wird. Das Befestigungselement wird durch den zu befestigenden Gegenstand 16 hindurch in das Bohrloch eingetrieben. Durch Aufdrehen der Mutter 17 auf den überstehenden Gewindeabschnitt 3 wird der Schaft 2 gegenüber dem Keil 6 axial in Richtung Bohrlochmündung verschoben, so daß der Keil 6 durch die ansteigende Grundfläche 18 der Längsnut 5 radial nach außen gedrückt wird (siehe Figur 2) .Dabei graben sich die Zähne 8 des Keils 6 in die Bohrlochwandung ein und bewirken die Verankerung des Befestigungselementes. Die Zähne 8 weisen ein sägezahnförmiges Profil auf, wobei die Zahnflanke 19 zum vorderen Stirnende 13 hin zur Reduzierung des Eintreibwiderstandes abgeschrägt ist. Um auch bei Extrembedingungen ein günstiges Gleitverhalten zu erreichen, ist zwischen dem Keil 6 und der Grundfläche 18 der Längsnut 5 eine Gleitschicht 20 in Form einer Kunststoffeinlage, Beschichtung oder dgl. angeordnet. Ein günstiges Gleitverhalten kann auch durch entsprechende Oberflächenbehandlung der Auflagefläche des Keils 6 bzw. der Grundfläche 18 der Längsnut 5 erreicht werden.

Figur 3 zeigt einen Querschnitt gemäß der in Figur 2 eingezeichneten Schnittlinie A-A. Die dachförmige Ausbildung des Zahns 8 begünstigt ein tiefes Eindringen des Keils 6 in die Bohrlochwandung des Bauteils 10. Im Bereich des Zahnfußes 21 kommt dann die gesamte Breite des Keils 6 zur Wirkung, so daß bei relativ geringem Drehmoment für die axiale Verschiebung hohe Haltewerte mit dem erfindungsgemäßen Befestigungselement erzielbar sind.

Bei dem in Figur 4 und 5 dargestellten Befestigungselement 1 weist der in der Längsnut 5 eingelegte Keil 6' eine Anlaufschräge 21 auf, die sich vom vorderen Ende des Keils 6' bis zur Spitze des Zahnes 8' erstreckt. Die Länge der Anlaufschräge 21 entspricht etwa der Länge zweier Zähne 8. Des weiteren kann der Winkel (β) der Anlaufschräge 21 etwa dem Ansteigwinkel (α) der Grundfläche 18 der Längsnut 5 entsprechen.

## Patentansprüche

1. Befestigungselement mit am hinteren Ende angeordnetem Haltemittel zur Verspannung eines Gegenstandes an einem Bauteil, und einem vom vorderen Stirnende ausgehenden und in Längsrichtung über einen Teil der Länge des Schaftes des Befestigungselementes verlaufenden Spreizbereich, der durch eine zum vorderen Stirnende eine ansteigende Grundfläche aufweisenden Längsnut mit in der Längsnut eingesetztem und zum vorderen Stirnende verschiebbaren Keil gebildet ist, der an seiner Außenfläche Zähne aufweist, **dadurch gekennzeichnet,** daß die ansteigende Grundfläche (18) der Längsnut (5) in einem Abstand zum vorderen Stirnende (13) am Außenumfang des Schaftes (2) ausläuft, daß die an der Außenfläche des Keils (6) angeordneten Zähne (8) dachförmig ausgebildet sind und den Schaft (2) zumindest mit einem Teil ihrer Höhe überragen, daß an dem Keil (6) ein Halteelement (7) angreift, welches den Keil (6) lösbar mit der Längsnut (5) festhält, und daß der Keil (6) an der zum hinteren Ende (4) des Befestungselementes weisenden Begrenzung der Längsnut (5) an einem halbrund ausgebildeten Anschlag (12) anliegt.

2. Befestigungselement nach Anspruch 1, **dadurch gekennzeichnet,** daß die Längsnut (5) an ihrem zum hinteren Stirnende (4) des Befestigungselementes (1) weisenden Ende mindestens eine dem halben Durchmesser des Schaftes (2) entsprechende Tiefe aufweist und der Ansteigwinkel (α) der Grundfläche (18) zwischen 10° und 15°, insbesondere zwischen 11° und 13° liegt.

3. Befestigungselement nach Anspruch 1, **dadurch gekennzeichnet**, daß der Keil (6) in der Längsnut (5) auf einer Gleitschicht (20) aufsitzt.

4. Befestigungselement nach Anspruch 3, **dadurch gekennzeichnet,** daß die Gleitschicht (20) durch ein der Grundfläche (18) der Längsnut (5) entsprechendes Kunststoffplättchen gebildet ist.

5. Befestigungselement nach Anspruch 1, **dadurch gekennzeichnet,** daß die Höhe der Zähne (8) zum vorderen Stirnende (13) hin geringfügig abnimmt.

6. Befestigungselement nach Anspruch 1, **dadurch gekennzeichnet,** daß die Zähne (8) unterschiedliche Zahnflanken aufweisen, wobei die kürzere Zahnflanke (19) in Richtung zum vorderen Stirnende (13) angeordnet ist.

7. Befestigungselement nach Anspruch 1, **dadurch gekennzeichnet**, daß am vorderen Stirnende (13) des Befestigungselementes (1) eine durch einen Absatz (14) gebildete Schabkante (15) angeordnet ist.

8. Befestigungselement nach Anspruch 1, **dadurch gekennzeichnet,** daß am vorderen Ende des Keils (6') eine Anlaufschräge (21) angeordnet ist, die sich bis zur Spitze des ersten Zahnes (8') erstreckt.

9. Befestigungselement nach Anspruch 8, **dadurch gekennzeichnet,** daß die Länge der Anlaufschräge (21) wenigstens der Länge zweier Zähne (8) entspricht.

10. Befestigungselement nach Anspruch 8, **dadurch gekennzeichnet,** daß der Winkel (β) der Anlaufschräge (21) etwa dem Ansteigwinkel (α) der Grundfläche (18) der Längsnut (5) entspricht.

## Claims

1. A fixing element having holding means arranged at the rear end for clamping an article to a building component, and an expansion region starting from the leading end and extending in the longitudinal direction for part of the length of the shank of the fixing element, which expansion region is formed by a longitudinal slot having a base surface rising towards the leading end and a wedge inserted in the longitudinal slot and displaceable towards the leading end, the outer surface of the wedge (6) being provided with teeth (8), **characterized in that** the upwardly sloping base surface (18) of the longitudinal slot (5) ends at the outer circumference of the shank (2) at a spacing from the leading end (13), the teeth (8) arranged on the outer surface of the wedge (6) are of roof-shaped construction and project beyond the shank (2) at least by part of their height, a retaining element (7) which holds the wedge (6) movably in the longitudinal slot (5) acts on the wedge (6), and at the boundary of the longitudinal slot (5) nearest to the rear end (4) of the fixing element, the wedge (6) bears against a semi-circular stop member (12).

2. A fixing element according to claim 1, **characterized in that**, at its end facing towards the rear end (4) of the fixing element (1), the longitudinal slot (5) has at least a depth corresponding to half the diameter of the shank (2) and the angle of rise (α) of the base surface (18) lies between 10° and 15°, especially between 11° and 13°.

3. A fixing element according to claim 1, **characterized in that** the wedge (6) in the longitudinal slot (5) rests on a sliding-contact layer (20).

4. A fixing element according to claim 3, characterized in that the sliding-contact layer (20) is formed by a plastics material platelet corresponding to the base surface (18) of the longitudinal slot (5).

5. A fixing element according to claim 1, characterized in that the height of the teeth (8) decreases slightly towards the leading end (13).

6. A fixing element according to claim 1, characterized in that the teeth (8) have disparate tooth flanks, the shorter tooth flank (19) being arranged towards the leading end (13).

7. A fixing element according to claim 1, characterized in that at the leading end (13) of the fixing element (1) there is arranged a scraper edge (15) formed by a step (14).

8. A fixing element according to claim 1, characterized in that a ramp (21) extending to the tip of the first tooth (8') is arranged at the leading end of the wedge (6').

9. A fixing element according to claim 8, characterized in that the length of the ramp (21) corresponds at least to the length of two teeth (8).

10. A fixing element according to claim 8, characterized in that the angle (β) of the ramp (21) corresponds approximately to the angle of rise (α) of the base surface (18) of the longitudinal slot (5).

## Revendications

1. Elément de fixation comportant un moyen de blocage, disposé à l'extrémité arrière, pour brider un objet sur un composant, ainsi qu'une zone d'expansion qui part de l'extrémité frontale avant, s'étend selon la direction longitudinale sur une partie de la longueur du fût de l'élément de fixation et qui est formée par une rainure longitudinale présentant, en direction de l'extrémité frontale avant, une surface de base en pente montante avec un coin qui est inséré dans la rainure longitudinale, peut coulisser en direction de l'extrémité frontale avant et présente sur sa surface extérieure des dents, caractérisé par le Fait que la surface de base (18), en pente montante, de la rainure longitudinale (5) s'achève, à une certaine distance de l'extrémité frontale avant (13), à la périphérie extérieure du fût (2), que les dents (8) disposées à la surface extérieure du coin (6) sont en forme de toit et dépassent du fût (2) d'au moins une partie de leur hauteur, que vient en prise avec le coin (6) un élément de maintien (7) qui maintient le coin (6), de façon amovible dans la rainure longitudinale (5), et qu'à la limite de la rainure longitudinale (5) orientée vers l'extrémité arrière (4) de l'élément de fixation, le coin (6) s'appuie contre une butée (12) de forme demi-ronde.

2. Elément de fixation selon la revendication 1, caractérisé par le fait qu'à son extrémité orientée vers l'extrémité frontale arrière (4) de l'élément de fixation (1), la rainure longitudinale (5) présente au moins une profondeur correspondant au demi-diamètre du fût (2) et que l'angle de pente montante (α) de la surface de base (18) vaut entre 10° et 15°, en particulier entre 11° et 13°.

3. Elément de fixation selon la revendication 1, caractérisé par le fait que, dans la rainure longitudinale (5), le coin (6) repose sur une couche glissante (20).

4. Elément de fixation selon la revendication 3, caractérisé par le fait que la couche glissante (20) est formée par une plaquette de plastique correspondant à la surface de base (18) de la rainure longitudinale (5).

5. Elément de fixation selon la revendication 1, caractérisé par le fait que la hauteur des dents (8) va en diminuant légèrement en direction de l'extrémité frontale avant (13).

6. Elément de Fixation selon la revendication 1, caractérisé par le fait que les dents (8) présentent des flancs différents, le flanc le plus court (19) étant disposé en direction de l'extrémité frontale avant (13).

7. Elément de fixation selon la revendication 1, caractérisé par le fait qu'à l'extrémité frontale avant (13) de l'élément de fixation (1) est disposée une arête de raclage (15) formée par un décrochement (14).

8. Elément de fixation selon la revendication 1, caractérisé par le fait qu'à l'extrémité frontale avant du coin (6') est disposée une pente d'abordage (21) qui s'étend jusqu'à la pointe de la première dent (8').

9. Elément de fixation selon la revendication 8, caractérisé par le fait que la longueur de la pente d'abordage (21) correspond au moins à la longueur de deux dents (8).

10. Elément de fixation selon la revendication 8, caractérisé par le fait que l'angle (β) de la pente d'abordage (21) correspond à peu près à l'angle de pente montante (α) de la surface de base (18) de la rainure longitudinale (5).
